Europäisches Patentamt

**European Patent Office**

**Office européen des brevets**

(11) Publication number:

**0 135 156**
**A1**

(12) **EUROPEAN PATENT APPLICATION**

(21) Application number: **84109781.9**

(22) Date of filing: **17.08.84**

(51) Int. Cl.⁴: **F 16 H 57/02**

(30) Priority: **22.08.83 IT 2264383 U**
**22.11.83 IT 2361683 U**

(43) Date of publication of application:
**27.03.85 Bulletin 85/13**

(84) Designated Contracting States:
**DE FR GB**

(71) Applicant: **COMER S.p.A.**
**Zona Industriale**
**I-42046 Villanova di Reggiolo (Province of Reggio Emilia)(IT)**

(72) Inventor: **Fabbri, Fabrizio**
**Via Zurlini 47**
**I-41100 Modena(IT)**

(74) Representative: **Modiano, Guido et al,**
**MODIANO, JOSIF, PISANTY & STAUB Modiano & Associati Via Meravigli, 16**
**I-20123 Milan(IT)**

(54) **Universal type of case structure for angle drive units in generic agricultural machinery.**

㉗ The invention is concerned with a universal type of case structure for angle drive units in generic agricultural machinery, which comprises a one-piece construction box-like body of substantially parallelepipedal configuration less one face (102), on the faces of the box-like body there being provided regions for the formation of seats (104) to accommodate bearings (105) therein which provide support for an input shaft (106) and at least one output shaft (130). Also provided is a cover element (140) which is mountable to close the missing face (102) of the parallelepipedon.

Fig. 6

Croydon Printing Company Ltd.

EP 0 135 156 A1

"UNIVERSAL TYPE OF CASE STRUCTURE FOR ANGLE DRIVE UNITS IN GENERIC AGRICULTURAL MACHINERY"

This invention relates to a universal type of case structure for angle drive units in generic agricultural machinery.

As is known, angle drive units, such as are commonly employed in agricultural machinery, comprise in general a box-like case casting, wherein seats are machined to accommodate the bearings for one of the units' shafts. In general, the other shaft is journalled in bearings accommodated in seats formed directly in a cover which is mounted to the case casting to complete the assembly.

Also known is that the utilization of machined covers to support a shaft poses some constructional problems in that the cover is to meet critical mechanical requirements and that alignment of the shaft bearing seats is difficult to achieve.

It should be further added that the use of cases of the type outlined above poses serious manufacturing problems, since the case tends to be inadequately versatile, as a result of its being unsuited to accommodate constructional alterations to meet different applicational requirements.

It is, accordingly, a primary object of this invention to obviate such prior shortcomings by providing a universal type of case structure for angle drive units in generic agricultural machinery, which affords the faculty of changing, without involving undue constructional complexities, the shaft arrangement in accordance with different application requirements.

A further object of the invention is to provide such a universal type of case structure which can accept high precision tolerance requirements with simplified machining procedures, and can reduce all the production steps involved in the fabrication of the covers.

It is another object of this invention to provide such a universal type of case structure which, thanks to its peculiar constructional features, can give full assurance of being reliable and safe to use.

A not unimportant object of the invention is also that of providing a universal type of case structure which can afford a significant reduction in costs along with an improved quality level thereof.

These and other objects, such as will be apparent hereinafter, are achieved by a universal type of case structure for angle drive units in generic agricultural machinery, according to the invention, characterized in that it comprises a one-piece construction box-like body of substantially parallelepipedal configuration less one face, provided on the faces of said box-like body being regions for the formation of seats adapted to accommodate bearings for an input shaft and at least one output shaft, there being further provided a cover element mountable to close said missing face of the parallelepipedon.

Further features and advantages will become apparent from the following detailed description of a universal type of case structure for angle drive units in generic agricultural machinery, as illustrated by way of example and not of limitation in the accompanying drawings, where:

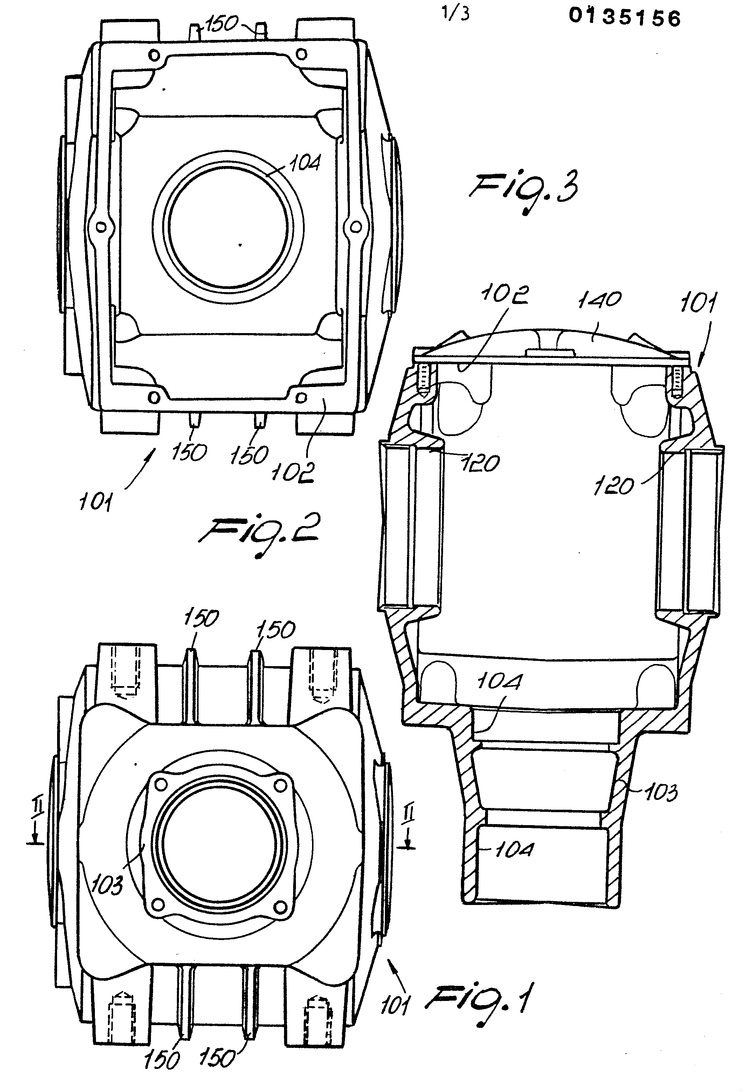

Figure 1 is a bottom plan view showing schematically this case;

Figure 2 is a sectional view of this case taken along the line II-II of Figure 1;

Figure 3 is a top plan view of this case;

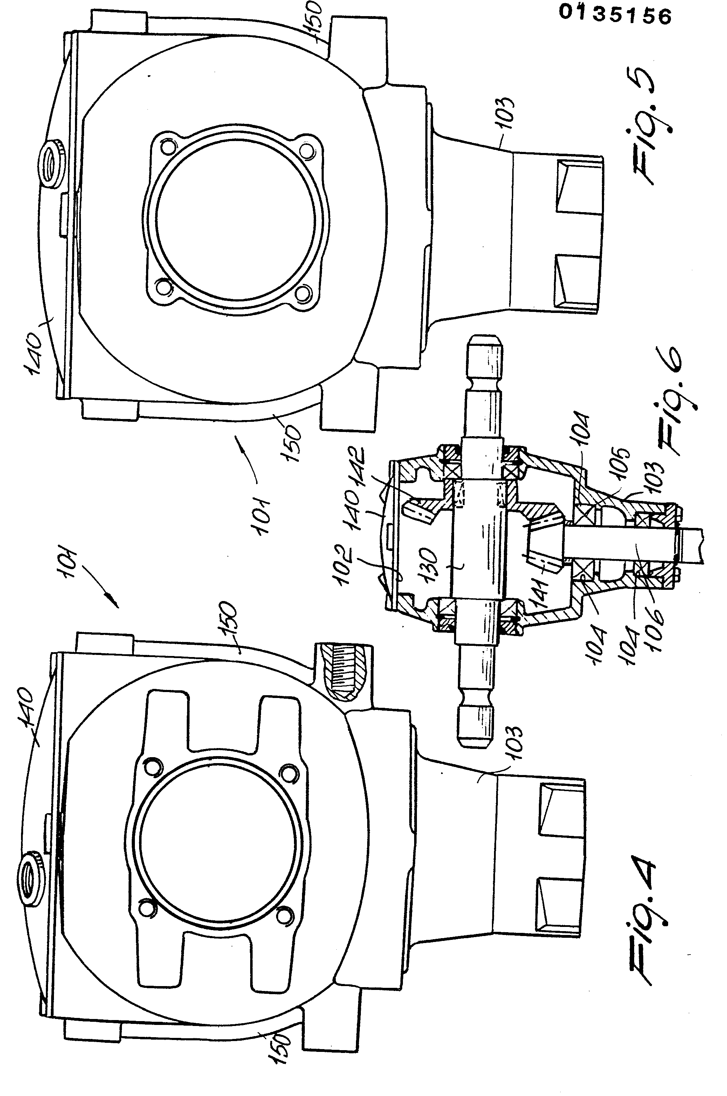

Figures 4 and 5 are side elevation views showing either sides of this case;

Figure 6 is a sectional view showing schematically this case with the angle drive components assembled within its interior;

Figure 7 is a sectional view through a further embodiment of this case, as employed in particular in shrub clearing machines; and

Figure 8 is a schematic view of the further embodiment of the invention shown in Figure 7.

With reference to the cited drawing views, a universal type of case structure for angle drive units in generic agricultural machinery, according to the invention, comprises a box-like body of one-piece construction, generally indicated by the reference numeral 1, which is advantageously fabricated as a metal casting and has an approximately parallelepipedal configuration.

The box-like body 1 has a face missing from its lateral surface, as indicated at 102 , its opposite face having a tang 103 which projects outwardly.

The tang 103 has regions defined thereon whereat seats 104 can be machined for accommodating bearings 105 in which an input shaft, generally indicated at 106, is journalled.

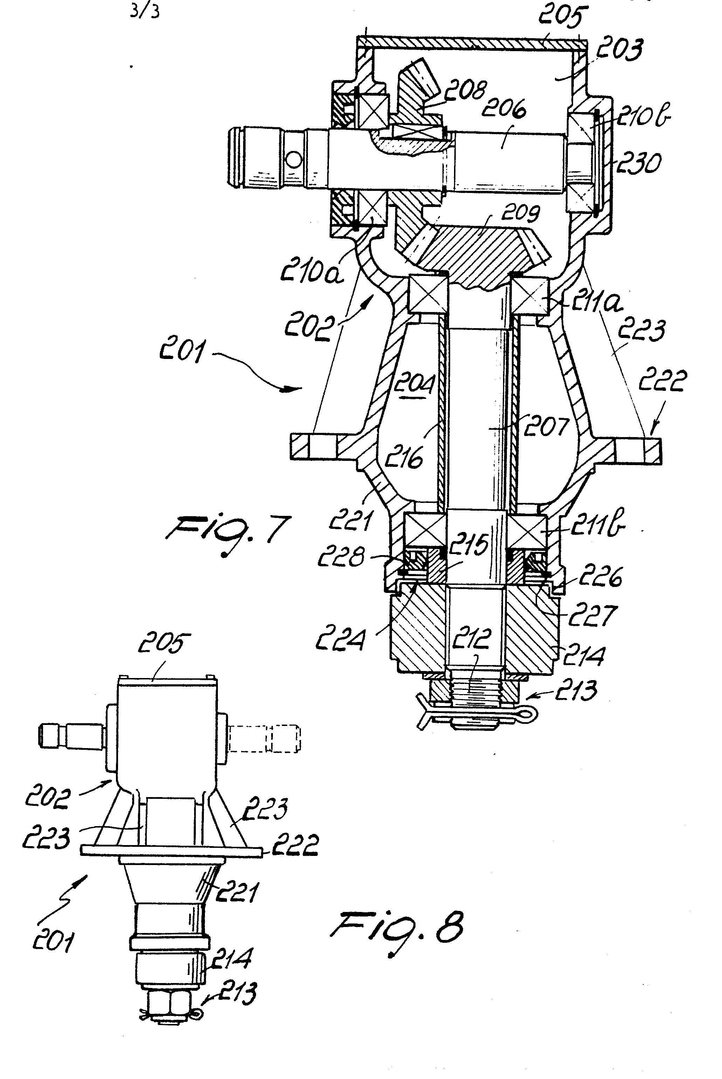

A peculiar aspect of the invention is that,on the remaining faces, impressions, indicated at 120, are provided which can also be machined into bearing seats for at least one output shaft, indicated at 130, which, contingent on individual requirements, may be of a throughgoing design, as shown in Figure 6, or alternatively only extend from one face of the case.

The fact that seats have been prearranged on all of the faces affords the user the faculty of making the seats in usable faces, thus achieving a universal type of case which is inherently fit for any assembling requirements contingent on its own constructional requirements.

Another important aspect is that, with the structure provided, a cover 140 which is assembled to close the missing face in the surface 102 has no structural functions but merely that of closing the case to prevent seepage of the oil which is normally poured into the case.

Merely as an example, it should be added that the two shafts are interconnected by a bevel pinion 141 meshing with a bevel gear 142 keyed to the other of the shafts.

Furthermore, the outer surface of the case may be provided with ribs, as indicated at 150, which will serve the dual functions of stiffening the structure and as a heat exchange means to dissipate the heat generated to the outside.

Figures 7 and 8 illustrate a further embodiment of this case, which comprises essentially an elongate case 202 of one-piece construction, preferably a cast piece, defining a first chamber 203 and second chamber 204, respectively, said chambers being interconnected and substantially aligned and open at opposite ends, whereat the first chamber is configured to receive a cover element 205.

Accommodated within the first and second chambers, respectively, are first and second drive shafts, designated with the reference numerals 206 and 207, which may operate as drive and output shafts, respectively and which have first and second drive gears keyed respectively thereto, as indicated at 208 and 209.

Said gears are mutually meshed bevel gears for transmitting the motion from the first or drive shaft to the second or output shaft; each shaft being supported in bearings, respectively 210a and 210b for the drive shaft, and 211a and 211b for the output shaft, being accommodated in corresponding seats provided on the case interior.

A further advantageous feature of the invention resides in the fit of the case to the output shaft, which includes, on the remote side to the gear 209, a keying means comprising a threaded end portion 212 of the shaft 207 which is engaged by a tightening arrangement of conventional design including a nut and cotter pin 213.

Such keying means, in addition to providing for the locking of the shaft of a tool holder element 214 thereon, apply an axial force which is sequentially split between said tool holder element, and through a spacer ring 215 mounted coaxially with the shaft 207, on the bearings 211a and 211b to hold the latter securely in the case 202 and tightly engage with the shaft itself.

Provided between the bearings 211a and 211b is a tubular spacer element 216 which accommodates the shaft coaxially thereinto; the mount just described, additionally to being extremely simple and economically favorable, also increases the strength of the inventive drive, because it provides a perfect keyed fit of the tool holder element and a correct assembly of the shaft within the case, while avoiding the objectionable nicking action exerted on the shaft by conventional threaded ring nuts or retainer rings.

Furthermore, a shaft so designed would require no changes in diameter along its length, thus affording an added degree of economy in manufacture and machining.

In order to improve the case strength characteristics, the same is provided at the chamber 204 with a biconical portion defined, respectively, by a first frustum 220 and second frustum 221 the minor diameters whereof are located, respectively, at the seats 211a and 211b, while their major diameters are located at the connection area between the frusta 220 and 221, whereat the case is formed with a mounting flange 222 externally to the chamber 204.

For heavy-duty applications, stiffening ribs 223 may also be provided to connect the case to the flange formation.

At the lower opening 224, the case has a step formation 225 which extends annularly around it and has a profile mating with one or more steps 226 formed on the tool holder element, thereby a labyrinth 227 is created which is effective to prevent dirt, grass, or other matter from entering the case and contaminate it.

It should be further noted that the ring spacer 215 provides an engagement surface for a seal ring 228 to be received in the cited lower opening adjacent to the bearing 211b.

It may be appreciated from the foregoing description that the invention achieves its objects, and in particular that the universal case structure for angle drive units, according to this invention, affords the faculty of prearranging connections on all of the case faces without having to alter the case structure itself.

Further, by providing all of the bearing seats in the case body, much closer manufacturing tolerances may be adopted, and no constructional problems posed by the cover manufacture, said cover would merely serve closure purposes.

The inventive structure, moreover, enables the use of a throughgoing shaft without involving any of the constructional complexities of prior structures.

- 8 -

0135156

In practicing the invention, any materials, provided that they are compatible with the specific intended application, and any dimensions and contingent shapes, may be selected, and used to meet ones individual requirements.

## CLAIMS

1. A universal type of case structure for angle drive units in generic agricultural machinery, characterized in that it comprises a one-piece construction box-like body (1, 201) of substantially parallelepipedal configuration less one face (102), provided on the faces of said box-like body (1) being regions for the formation of seats (104) adapted to accommodate bearings (105) for an input shaft (106, 206) and at least one output shaft (130, 207) there being further provided a cover element (140) mountable to close said missing face (102) of the parallelepipedon.

2. A universal type of case structure according to Claim 1, characterized in that said box-like body (1) is provided, on the opposed face thereof to said missing face (102), with a tang (103) wherein seats (104) may be provided for accommodating bearings (105) for said input shaft (106).

3. A universal type of case structure according to the preceding claims, characterized in that said box-like body (1) is provided, on the external surface thereof, with ribs (150) for stiffening and heat dissipation purposes.

4. A universal type of case structure according to one or more of the preceding claims, characterized in that said second shaft (207) includes, at the opposed end to a   output drive gear (209), a keying means (212,207,213) acting axially on said output shaft (207) to tightly clamp the bearings (211a,211b) for said shafts, in their corresponding seats by application of an axial force sequentially split between a tool holder element (214) and a ring spacer (215) interposed between said tool holder element (214) and one of said bearings (211a or 211b), between said bearings (211a, 211b) there being provided a tubular spacer element (216) adapted to receive said shaft (207) coaxially therethrough.

5. A universal type of case structure according to one or more of the preceding claims, characterized in that an elongate case (202) defines, at a second chamber (204), a biconical portion (220,221) having respective minor diameters located at said seats and a major diameter located at an intermediate portion of said second chamber (204) whereat said case is formed with a mounting flange (222) on the exterior of said chamber (204).

6. A universal type of case structure according to one or more of the preceding claims, characterized in that it comprises, located at a lower opening (224) of said second chamber (204), an annular step formation (225) adapted to cooperate with a mating profile formed on said tool holder element (214) to define a dust sealing labyrinth (227).

7. A universal type of case structure according to one or more of the preceding claims, characterized in that said ring spacer (215) provides a surface for engagement by a sealing ring (228).

Fig.3

Fig.2

Fig.1

140

101

150

150

150

*Fig.4*

102 140 142

130

141

104

104
104
106

105

103

*Fig.6*

140

101

150

150

103

*Fig.5*

2/2

0135156

3/3

0135156

Fig. 7

Fig. 8

## DOCUMENTS CONSIDERED TO BE RELEVANT

EP 84109781.9

| Category | Citation of document with indication, where appropriate, of relevant passages | Relevant to claim | CLASSIFICATION OF THE APPLICATION (Int Cl 4) |
|---|---|---|---|
| A | GB - A - 704 445 (FALK CORPORATION) <br> * Totality * | 1 | F 16 H 57/02 |
| A | GB - A - 909 487 (CORDE) <br> * Totality * | 1,2 | |
| A | DE - B2 - 1 630 902 (PORSCHE AG) <br> * Column 4, lines 30-40 * | 1-3 | |
| A | US - A 2 929 468 (STEINER) <br> * Column 2, lines 1-5 * | 1,4 | |
| A | US - A - 3 905 089 (OSENBAUGH et al.) <br> * Column 2, lines 14-26 * | 1,4 | **TECHNICAL FIELDS SEARCHED (Int. Cl.4)** |
| A | DE - B - 1 775 645 (CROSS CO.) <br> * Totality * | 1,6,7 | F 16 H <br> B 60 K |
| A | GB - A - 1 888 863 (HERWAY THORN) | | |
| A | US - A - 3 318 173 (PUIDOKAS) | | |

The present search report has been drawn up for all claims

| Place of search | Date of completion of the search | Examiner |
|---|---|---|
| VIENNA | 20-11-1984 | DENK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82